(19) Europäisches Patentamt
European Patent Office
Office européen des brevets

(11) Publication number: 0 157 426
A2

# (12) EUROPEAN PATENT APPLICATION

(21) Application number: 85104094.9

(22) Date of filing: 04.04.85

(51) Int. Cl.⁴: **C 08 L 67/02**, C 08 K 5/09, C 08 K 3/20, C 08 K 5/07, C 08 K 5/10, C 08 K 5/20, C 08 K 5/16, C 08 K 5/41, C 08 K 5/42, C 08 L 33/02

(30) Priority: **05.04.84 US 597103**

(43) Date of publication of application: **09.10.85 Bulletin 85/41**

(84) Designated Contracting States: **BE DE FR GB IT NL**

(71) Applicant: **E.I. DU PONT DE NEMOURS AND COMPANY, 1007 Market Street, Wilmington Delaware 19898 (US)**

(72) Inventor: **Hecht, James Lee, 111 South Spring Valley Road, Wilmington Delaware 19807 (US)**

(74) Representative: **Abitz, Walter, Dr.-Ing. et al, Abitz, Morf, Gritschneder, Freiherr von Wittgenstein Postfach 86 01 09, D-8000 München 86 (DE)**

## (54) Flame retardant thermoplastic polyester molding composition.

(57) Polyester molding compositions having excellent flame retardant properties and improved thermal stability, better color, higher heat deflection temperature and no blooming are prepared by incorporating therein 3–30 weight percent of a Group I metal salt of tetrabromo (or chloro) phthalic acid.

EP 0 157 426 A2

0157426

TITLE

FLAME RETARDANT THERMOPLASTIC POLYESTER MOLDING COMPOSITION

DESCRIPTION

Technical Field

This invention relates to certain flame retardant thermoplastic polyester molding compositions, such as those based on polyethylene terephthalate, polybutylene terephthalate, and copolymers and mixtures thereof, which compositions are characterized by improved thermal stability, better color, higher heat deflection temperature and no "blooming".

Flame retardant additives for polyester molding compositions have included a combination of a halogenated organic compound, such as brominated polystyrene, and a synergist, e.g. antimony oxide and certain metal antimonates, which achieve the desired degree of flame retardancy at a lower level of the halogenated organic compound. However, for certain polyester molding compositions, where the required processing temperatures are high, the choice of the halogenated organic compound is limited by the thermal stability of such halogenated compound.

The need exists for compositions that have excellent flame retardant properties, but which also have improved thermal stability, better color, higher heat deflection temperature and do not bloom.

Background Art

U.S. Patent 4,338,243, granted July 6, 1982 to Hecht et al discloses flame retardant polyethylene terephthalate molding compositions containing a halogenated organic compound, such as brominted polystyrene, and a metal antimonate as the fire retardant additives.

U.S. Patent 3,354,191, granted November 21, 1967 to Stivers discloses various tetrabromophthalate salts, including the dipotassium salt, and their use as flame retardant additives for flammable polymeric materials, such as polyethylene. The aluminum salt is considered superior and is the only salt claimed.

U.S. Patent 3,285,995, granted November 15, 1966 to Nametz et al discloses the use of purified tetrabromophthalic anhydride as a flame retardant additive for polyester resins, including polyethylene terephthalate. Nametz purifies the anhydride by forming the soluble sodium salt, but precipitates the anhydride with hydrochloric acid and uses the insoluble anhydride, rather than the sodium salt as the flame retardant additive.

None of the references discussed above disclose the use of a Group I metal salt of tetrabromo (or tetrachloro) phthalic anhydride in polyethylene terephthalate molding compositions, or that such use results in a molding resin having excellent fire retardant properties and improved thermal stability, better color, higher heat distortion temperatures and no blooming.

Disclosure of the Invention

This invention relates to certain flame retardant thermoplastic polyester molding compositions which are characterized by improved thermal stability, better color, higher heat deflection temperature and no blooming. It has been found that certain halogenated organic salts can be blended with conventional polyester molding compositions and impart to such compositions excellent fire retardant properties and also cause surprising improvements in other properties of the molding composition as compared with known commercially available flame retardant

additives for polyester molding compositions and also as compared with other known materials which are chemically similar to the halogenated organic compounds used in the compositions of the present invention, and which other known materials are also known to be generally useful as flame retardants in flammable polymers.

More specifically, it has been found that Group I metal salts of a tetrahalophthalic acid, where the halogen is bromine or chlorine, can be used in thermoplastic polyester molding compositions to impart excellent flame retardant properties to such compositions and also to impart improved thermal stability, better color, higher heat deflection temperarure and no blooming to such compositions. This is particularly surprising because known fire retardants are chemically quite similar and do not have these effects on polyester molding compositions, and because Group I salts of tetrabromophthalic anhydride have been used as fire retardants in polyethylene and this combination of unexpected properties was not observed in such compositions (in fact the Group I salts were judged to be inferior).

The term "polyester" as used herein includes polymers which are, in general, linear saturated condensation products of glycols and dicarboxylic acids, or reactive derivatives thereof. Preferably, they will comprise condensation products of aromatic dicarboxylic acids having 8 to 14 carbon atoms and at least one glycol selected from the group consisting of neopentyl glycol, cyclohexane dimethanol and aliphatic glycols of the formula $HO(CH_2)_nOH$ where n is an integer of 2 to 10. Up to 50 mole percent of the aromatic dicarboxylic acids can be replaced by at least one different aromatic dicarboxylic acid having

from 8 to 14 carbon atoms, and/or up to 20 mole percent can be replaced by an aliphatic dicarboxylic acid having from 2 to 12 carbon atoms.

Preferred polyesters include polyethylene terephthalate; poly(1,4-butylene)terephthalate; and 1,4-cyclohexylene dimethylene terephthalate/isophthalate copolymer and other linear homopolyer esters derived from aromatic dicarboxylic acids, including isophthalic, bibenzoic, naphthalene-dicarboxylic including the 1,5-; 2,6-; and 2,7-naphthalenedicarboxylic acids; 4,4'-diphenylenedicarboxylic acid; bis(p-carboxyphenyl) methane; ethylene-bis-p-benzoic acid; 1,4-tetramethylene bis(p-oxybenzoic) acid; ethylene bis(p-oxybenzoic) acid; 1,3-trimethylene bis(p-oxybenzoic) acid; and 1,4-tetramethylene bis (p-oxybenzoic) acid, and glycols selected from the group consisting of 2,2-dimethyl-1,3-propane diol; neopentyl glycol; cyclohexane dimethanol and aliphatic glycols of the general formula $HO(CH_2)_nOH$ where n is an integer from 2 to 10, e.g., ethylene glycol; 1,3-trimethylene glycol; 1,4-tetramethylene glycol; 1,6-hexamethylene glycol; 1,8-octamethylene glycol; 1,10-decamethylene glycol; 1,3-propylene glycol; and 1,4-butylene glycol. Up to 20 mole percent, as indicated above, of one or more aliphatic acids, including adipic, sebacic, azelaic, dodecanedioic acid or 1,4-cyclohexanedicarboxylic acid can be present.

The most preferred polyester molding compositions are based on polyethylene terephthalate homopolymers, polybutylene terephthalate homopolymers, polyethylene terephthalate/polybutylene terephthalate copolymers, polyethylene terephthalate/polybutylene terephthalate mixtures and mixtures thereof.

The polyesters used in the compositions of the present invention are those which have an inherent viscosity of at least 0.4 as measured by ASTM D-2857. The polyester preferably has an upper limit on inherent viscosity of about 1.2. Inherent viscosity is measured in a 3:1 by volume ratio of methylene chloride and trifluoroacetic acid at 30°C. The polyester can contain up to 50% by weight of other comonomers such as isophthalic acid, glutaric acid, and other dicarboxylic acids, polyalkylene ether glycols, cyclohexane dimethanol, diethylene glycol and other diols. Preferably the polyester is present in an amount between 35 and 70% by weight of the composition.

The metal salts of a tetrahalophthalic acid will be used in the compositions of the present invention in an amount of from 3 to 30 weight percent of the composition, preferably 5-20 weight percent, and most preferably 10-18 weight percent. The metal will be a Group I metal preferably sodium or potassium, and most preferably sodium. The halogen will be bromine or chlorine, preferably bromine.

The compositions of the present invention can contain up to 15 weight percent of an antimony salt, preferably 0.5-10.0 weight percent, and most preferably 1.5-4.0 weight percent. If no antimony salt is used, or if only a small amount of antimony salt is used, the quantity of the metal salt of the tetrahalophthalic acid needed to give a particular level of fire retardency must be increased accordingly. The antimony salt will be an antimonate of metals of Groups I, II or VIII. Representative antimonates include sodium, potassium, zinc and nickel antimonate, and mixtures thereof. Sodium

antimonate is preferred. The antimonate will preferably be used in particulate or powder form. In addition, when the polyester is polyethylene terephthalate, polybutylene terephthalate, or mixtures or copolymers thereof, antimony oxide can be used in addition to or in place of the antimonate.

The compositions of the present invention can also contain up to 50 weight percent of a reinforcing or filler material, preferably 15-45 weight percent, and most preferably 25-35 weight percent. The reinforcing or filler material can include glass fibers, graphite fibers, aramid fibers, glass beads and flakes, aluminum and calcium silicates, asbestos, mica, and the like, and combinations of such materials. Glass fibers alone, or in combination with other fillers such as calcium silicates, mica and glass flakes, are preferred.

The compositions of the present invention can include various other additives, including crystallization promoters, minerals, epoxides, lubricants, pigments and tougheners.

Crystallization promoters which can be used in the compositions of the present invention and are especially preferred when the polyester is polyethylene terephthalate or a copolymer or mixture of polyethylene terephthalate and polybutylene terephthalate include

(1) material derived from

(a) hydrocarbon acids containing between about 7 and 25 carbon atoms or organic polymers which contain pendant carboxyl groups, and

(b) sodium and/or potassium ion sources capable of reacting with the carboxyl groups of the acids or polymers of (a), and

(2) selected low molecular weight organic compounds including esters, ketones, sulfones, sulfoxides, nitriles and amides.

Representative hydrocarbon acids include stearic, pelargonic and behenic acids. Representative organic polymers are copolymers of olefins and acrylic or methacrylic acids, or copolymers of aromatic olefins and maleic anhydride. Preferably the material defined by (1) (a) and (b), above, is the sodium or potassium salt of stearic acid, the sodium or potassium salt of ethylene/methacrylic acid copolymers (including both wholly or partially neutralized salts) the sodium salt of styrene/maleic anhydride copolymers (including both wholly or partially neutralized salts) and sodium versatate. In the copolymers listed above the olefin or aromatic olefin moiety ordinarily comprises 50-98 percent by weight of the copolymer, and preferably 80-98 percent. An especially preferred material is the sodium salt of ethylene/methacrylic acid copolymer. The copolymers can be prepared by conventional high pressure polymerization technology.

Preferably, the amount of the material defined by (1) (a) and (b), above, is an amount which will result in a $\Delta H_H/\Delta H_C$ ratio, of the composition of less than 0.25. To find the $\Delta H_H/\Delta H_C$, polyethylene terephthalate is molded at a mold temperature of 70°C into 1/16" thick bars. The bars are heated at a rate of 10°C per minute and between 95°C and 120°C an exotherm (termed $\Delta H_H$) is recorded on a differential scanning calorimeter (DSC) cell attached to a Du Pont Differential Thermal Analysis (DTA) device. The bar is heated to 290° (which is above its melting point) and the melted

sample cooled at 10°C/minute. Another exotherm between about 200-225°C (termed $\Delta H_c$) is recorded on freezing of the sample. It has been found that the $\Delta H_H/\Delta H_c$ ratio is a convenient method of measuring the degree of crystallization.

Representative of the low molecular weight organic compounds are aromatic esters, or organic ketones, sulfones, sulfoxides, nitriles or amides. Preferably the organic ester is the product of an aromatic carboxylic acid of 7-11 carbon atoms containing at least 1 carboxyl group per aromatic nucleus, and an alcohol selected from those of the formula $(HOCH_2)_xR'$ wherein x is 1, 2 or 3 and R' is a hydrocarbon radical of 2-15 carbon atoms (preferably 2-10 carbon atoms) or those of the formula $HO-(R''O)_yR'''$ wherein y is a cardinal number between 1 and 15 and preferably between 1 and 8, R" is a hydrocarbon radical of 2-15 carbon atoms (preferably 2-8 carbon atoms) and R''' is -H or a hydrocarbon radical of 2-20 carbon atoms (preferably 2-12 carbon atoms). Preferred organic esters are those in which the aromatic carboxylic acid and the aliphatic carboxylic acid are hydrocarbon acids containing 1-3 carboxyl groups and the alcohols are aliphatic. In other words, the R groups in the alcohols are alkyl or alkylene depending upon the particular R group. Preferably also when the carboxylic acids contain two or more carboxyl groups, the carboxyl groups are all reacted to form ester (COO) linkages, that is, there will be no free carboxyl groups present in the ester. Preferably, all the hydroxyl groups of the alcohols will also be reacted to form ester (COO) linkages, that is, there will be no free hydroxyl groups present in the ester.

A particularly preferred class of esters are those represented by the formula:

$$A - O - \left[ \underset{X}{\underset{|}{CH}} - (CH_2)_m - O \right]_n - B$$

where m is an integer from 1 to 3, inclusive,
n is an integer from 4 to 25, inclusive,
X is $CH_3$, $C_2H_5$ or H,
A is alkyl, acyl or aroyl of 1 to 10 carbon atoms, and
B is alkyl, acyl or aroyl of 1 to 10 carbon atoms.

Especially preferred are polyethylene glycol 400 bis(2-ethylhexanoate) and dibenzoate of neopentyl glycol.

While the organic esters are preferred for use herein, other compounds which may be used include

organic ketones of the formula $R\overset{O}{\overset{\|}{C}}R$,

organic sulfones of the formula RSOOR,

organic sulfoxides of the formula $R_2SO$,

organic nitriles of the formula RCN, or

organic amides of the formula $R\overset{O}{\overset{\|}{C}}NR'R$ or

$R\overset{O}{\overset{\|}{S}}ONR'R$ wherein each R can be the same as or different from any other R and a hydrocarbyl group of 1-25 carbon atoms, while R' is hydrogen or a hydrocarbyl group of 1-25 carbon atoms. Especially preferred is n-tallow sulfonamide.

The low molecular weight organic compound should contain no more than 30 carbon atoms and should preferably be present in the composition in an amount sufficient to lower the Tpk of the composition by at least about 4°C as compared with a composition

otherwise identical except that it contins none of the low molecular weight organic compound.

The Tpk of the composition is the temperature at which heat evolves most rapidly during the heating cycle described above in connection with measurement of $\Delta H_H$.

The ratio of the material described in (1) (a) and (b), above, to the low molecular weight organic compound will generally be between 2:1 and 1:3.

In addition to the components discussed hereinabove, the compositions of this invention may contain additives commonly used with polyester resins, such as colorants, mold release agents, antioxidants, tougheners, nucleating agents, ultraviolet light and heat stabilizers and the like.

The compositions of this invention are prepared by blending the components together by any convenient means to obtain an intimate blend. Neither temperature nor pressure are critical. For example, the polyethylene terephthalate can be mixed dry in any suitable blender or tumbler with the other components and the mixture melt-extruded. The extrudate can be chopped. If desired the reinforcing or filling agent can be omitted initially and added after the first melt extrusion, and the resulting mixture can then be melt extruded.

Accordingly, the compositions of the present invention comprise:

A. 20-90 weight percent of polyester having an inherent viscosity of at least 0.4,

B. 0-50 weight percent of a reinforcing or filling material,

C. 0-15 weight percent of at least one compound selected from the group consisting of antimony oxide and antimonates of a metal of Group I, II or VIII of the Periodic Table, and

D. 3-30 weight percent of a Group I metal salt of a tetrahalophthalic acid, where the halogen is bromine or chlorine.

When the polyester is polyethylene terephthalate or a copolymer or mixture of polyethylene terephthalate and polybutylene terephthalate, where in said mixtures and copolymers, the weight proportion of ethylene terephthalate units is at least 50%, the compositions of the present invention may also contain:

E. material present in amount sufficient to provide a $\Delta H_H/\Delta H_C$ ratio for the composition of less than 0.25, said material derived from

(a) hydrocarbon acids containing between about 7 and 25 carbon atoms or organic polymers which contain pendant carboxyl groups, and

(b) sodium and/or potassium ion sources capable of reacting with the carboxyl groups of the acids and polymers of (a),

F. at least one compound present in an amount sufficient to provide a lowering of at least 4°C of the Tpk of the composition as compared with a composition otherwise identical but not containing said at least one compound, said compound being selected from

(a) organic esters selected from the reaction product of an aromatic carboxylic acid of 7-11 carbon atoms containing at least 1 carboxyl group per aromatic nucleus which is attached directly to said nucleus, and an alcohol selected from those of the formula $(HOCH_2)_2R'$ wherein x is 1, 2 or 3 and R' is a hydrocarbon radical of 2-15 carbon atoms or those of the formula $HO(R''O)_yR'''$ wherein y is a cardinal number between 1 and 15, R" is a hydrocarbon radical of 2-15 carbon atoms, and R"' is -H or a hydrocarbon radical of 2-20 carbon atoms,

(b) organic ketones of the formula

O
‖
RCR,

(c) organic sulfones of the formula RSOOR,

(d) organic sulfoxides of the formula $R_2SO$,

(e) organic nitriles of the formula RCN, and

(f) organic amides of the formula

O　　　O
‖　　　‖
RCNR'R or RSONR'R

wherein in formulas (b) through (f) each R can be the same as, or different from, any other R and is a hydrocarbyl group of 1-25 carbon atoms, while in the formulas in (f) R' is hydrogen or a hydrocarbyl group of 1-25 carbon atoms, and

G. such other additives as are commonly used in polyethylene terephthalate molding resins, including crystallization promoters, minerals, epoxides, lubricants, pigments, tougheners, colorants, mold release agents, antioxidants, nucleating agents, and ultraviolet light and heat stabilizers.

In the following examples, there are shown specific embodiments of the present invention and certain side-by-side comparisons with embodiments of control experiments where the Group I metal salt of the tetrahalophthalic anhydride is replaced with halogenated flame retardant additives commonly and commercially used in polyethylene terephthalate molding resins, and with salts of a tetrahalophthalic acid where the metal is other than a Group I metal. It will be seen that the compositions of the present invention are characterized by excellent flame retardant properties and superior thermal stability, color, heat deflection temperature and blooming characteristics as compared with the control compositions. All parts and percentages are by weight, and all temperatures are in degrees Celsius unless otherwise specified. Measurements not originally in SI units have been so converted and rounded where appropriate.

In the following examples, tensile strength and elongation were measured on injection molded bars by ASTM Method D-638. Test bars were 1/8" (0.32 cm) ASTM D-638-Type I bars. Unnotched impact strength was measured by cutting 5 x 1/2 x 1/8 inch (12.7 x 1.27 x 0.32 cm) injection molded bars to the size specified for the Izod test in ASTM Method D256, but without

notching the bars, and otherwise running the test by Izod method ASTM D256. Flame-retardancy was measured by Underwriter's Laboratory Method UL-94. Thermal stability, as indicated by a change in viscosity over time at elevated temperature was measured as the viscosity at a shear stress of 125 kPa using a Monsanto Automatic Capillary Rheometer. The orifice had a land length of 0.62 inch (1.57 cm) and a diameter of 0.031 inch (0.079 cm). Temperature was controlled to within 0.2°C, and the sample was dried at 150°C for 3-4 hours before testing.

Blooming was evaluated by placing molded flex bars in an air oven at 150°C for 16 hours. The bars were then removed and cooled at room temperature. Blooming was considered to have occurred when the surface, which was originally glossy and free of any deposits, was observed to be dull and when a deposit could be detected by rubbing one's finger over the surface.

Color was measured subjectively by visual comparison. Color differences observed in these experiments could also be measured by a HunterLab Color/Difference Meter.

The heat deflection temperature was determined by ASTM D-648 at 264 p.s.i. (1.8 MPa).

Example 1

Preparation of Metal Salts of Tetrabromophthalic Anhydride

(a) Sodium tetrabromophthalate was prepared by adding 981 grams of tetrabromophthalic anhydride to 4,400 grams of water in a stirred beaker, heating to 60°C, and then adding 167 grams of sodium hydroxide. After 10 minutes, during which the temperature was maintained at 65-70°C, the pH was measured and a sufficient amount of a 5% solution of sodium hydroxide was added to bring the pH up to a

constant 9.0. The solution was then filtered, after which the pH of the filtrate was measured and sufficient sodium hydroxide was added to bring the pH up to 8.5 (it had fallen from 9.0 because of additional reaction during filtration). This solution was then placed in a glass dish and heated in an oven to dryness, after which the sodium tetrabromophthalate was dried in a vacuum oven for 2 hours at 150°C. The product, which weighed 1,010 grams, was then crushed and ground prior to use.

(b) Calcium tetrabromophthalate was prepared by adding a solution of calcium chloride to a solution of sodium tetrabromophthalate, prepared as in paragraph (a) above, filtering of the insoluble calcium salt, washing, drying and grinding.

Example 2

Preparation of Modified Polyethylene Terephthalate Compositions

(a) The sodium tetrabromophthalate prepared by the process of Example 1(a) was used in a modified polyethylene terephthalate composition prepared by the teachings of U.S. Patent 4,338,243. This composition was made by mixing together the following:

3460 grams (47.15%) of polyethylene terephthalate polymer which had an intrinsic viscosity of 0.59 and which had been dried to less than 0.05% water.

942 grams (12.8%) of sodium tetrabromophthalate

160 grams (2.2%) of sodium antimonate

260 grams (3.4%) of ethylene/methacrylic acid copolymer (85/15 by weight) which had been neutralized with sodium

229 grams (3.1%) of the dibenzoate of neopentyl glycol

44 grams (0.6%) of the epoxide formed from

the reaction of "Bisphenol" A [i.e. 2,2-bis(4-hydroxyphenyl propane)] and epichlorohydrin

48 grams (0.65%) of pentaerythritol tetrastearate

7.3 grams (0.1%) of tetrakis [methylene (3,5-di-tert-butyl-4-hydroxyhydrocinnamate)] methane

2,200 grams (30.0%) of glass fibers with a diameter of 0.375 mil and an initial length before extrusion of 1/8 - inch (0.32 cm).

The blended compositions were passed through a two-stage, two-inch extruder in which the vacuum port was held at about 26 inches (66 cm) of vacuum. The melt, which was about 290°C, was passed through a die to give a single strand which was cooled and cut.

The resin thus produced was dried in a vacuum oven for 18 hours at 120°C.

(b) A composition was prepared as described in paragraph (a), above, except that brominated polystyrene (commerically available from Ferro Chemicals as "Pyrochek" 68PB) was substituted for the sodium tetrabromophthalate.

(c) A composition was prepared as described in paragraph (a), above, except that decabromodiphenyl ether was substituted for the sodium tetrabromophthalate.

(d) A composition was prepared as described in paragraph (a), above, except that calcium tetrabromophthalate was substituted for the sodium tetrabromophthalate.

(e) A composition was prepared as described in paragraph (a), above, except that N-tallow toluene sulfonamide was substituted for the dibenzoate of neopentyl glycol.

(f) A composition was prepared as described in paragraph (a), above, except that brominated

polystyrene was substituted for the sodium tetrabromophthalate and N-tallow toluene sulfonamide was substituted for the dibenzoate of neopentyl glycol.

Example 3

Preparation of Unmodified

Polyethylene Terephthalate Compositions

(a) The sodium tetrabromophthalate prepared by the process of Example 1 (a) was used in an unmodified polyethylene terephthalate composition prepared by mixing together, in a manner similar to that used in Example 2, the following:

3950 grams (53.75%) of polyethylene terephthalate which had an intrinsic viscosity of 0.59 and which had been dried to less than 0.05% water

942 grams (12.8%) of sodium tetrabromophthalate

160 grams (2.2%) of sodium antimonate

4.4 grams (0.6%) of the epoxide formed from the reaction of "Bisphenol" A and epichlorohydrin

48 grams (0.65%) of pentaerythritol tetrastearate

2,200 grams (30.0%) of glass fibers with a diameter of 0.375 mil and an initial length before extrusion of 1/8 inch

The resin thus produced was dried in a vacuum oven for 18 hours at 120°C.

(b) A composition was prepared as described in paragraph (a), above, except that brominated polystyrene ("Pyrochek" 68PB) was used instead of sodium tetrabromophthalate.

Example 4

Preparation of Polybutylene Terephthalate Compositions

(a) The sodium tetrabromophthalate prepared by the process of Example 1(a) was used in a

polybutylene terephthalate composition prepared by mixing together, in a manner similar to that used in Example 2 except that the processing temperature was 30°C lower, the following

3,720 grams (54.7%) of polybutylene terephthalate which had an intrinsic viscosity of 0.8 and which had been dried to less than 0.05% water

851 grams (12.5%) of sodium tetrabromophthalate

136 grams (2.0%) of antimony oxide

41 grams (0.6%) of the epoxide formed from the reaction of "Bisphenol" A and epichlorohydrin

2,040 grams (30.0%) of glass fibers with a diameter of 0.375 mil and an initial length before extrusion of 1/8 inch.

The resin thus produced was dried in a vacuum oven for 18 hours at 120°C.

(b) A composition was prepared as described in paragraph (a), above, except that brominated polystyrene ("Pyrochek" 68PB) was used instead of sodium tetrabromophthalate.

(c) A commercially available polybutylene terephthalate composition ("Valox" 420 SEO from the General Electric Company) containing a low molecular weight polycarbonate of tetrabromo "Bisphenol" A as a flame retardant was used for further comparison.

Preparation and Testing of Molded Samples
from Examples 2-4

The compositions prepared as described in Examples 2-4 were molded in a six-ounce, injection molding machine. Molding conditions were a fast ram, a ten-second forward time, a fifteen-second mold close time, a melt temperature of 290°C (except for Example 4, which was a melt temperature of 260°C), and a mold cavity temperature of 120°C. Samples were

tested as described above with the following results:

TABLE 1

| Example | 2(a) | 2(b) | 2(c) | 2(d) | 2(e) | 2(f) |
|---|---|---|---|---|---|---|
| Flammability Rating (of 1/32 in. [0.08cm] sample) | V-0 | V-0 | V-0 | V-1 | V-0 | V-0 |
| Color | Off-white | Beige | Off-white | Off-white | Off-white | Beige |
| Blooming | None | None | Noticeable | None | None | None |
| Unnotched Impact (J/m) | 850 | 750 | 750 | 640 | 690 | 750 |
| Tensile Strength (MPa) | 150 | 150 | 150 | 140 | 140 | 140 |
| Elongation, (%) | 2.5 | 2.3 | 2.1 | 2.1 | 2.1 | 2.1 |
| Melt Stability at 280°C as Loss in Viscosity Between 6 and 12 Min. (%) | 2 | 17 | 9 | 20 | 0 | 15 |
| Heat Deflection Temperature (°C) | 222 | 210 | 203 | 223 | 226 | 214 |

TABLE 1 (CONT.)

| Example | 3(a) | 3(b) | 4(a) | 4(b) | 4(c) |
|---|---|---|---|---|---|
| Flammability Rating | V-0 | V-0 | V-0 | V-0 | Not tested |
| Color | Off-white | Beige | Off-white | Beige | Off-white |
| Blooming | None | None | None | None | None |
| Unnotched Impact (J/m) | 590 | 590 | 960 | 910 | - |
| Tensile Strength (MPa) | 145 | 140 | 140 | 140 | - |
| Elongation, (%) | 1.8 | 1.9 | 2.4 | 2.4 | - |
| Melt Stability at 280°C as Loss in Viscosity Between 6 and 12 Minutes (%) | 10 | 28 | 4 | 23 | - |
| Heat Deflection Temperature (°C) | 239 | 219 | 214 | 209 | 200 |

Industrial Applicability

The polyester molding compositions of the present invention are useful in the manufacture of finished articles by injection molding. The excellent flame retardant properties and the superior thermal stability, color, heat deflection and blooming characteristics of articles made from the compositions of the present invention combined with other outstanding properties normally found in polyester molding compositions make them particularly well suited for electrical and electronic applications.

Best Mode

Although the best mode of the present invention, i.e. the single best polyester composition of the present invention, will depend upon the particular desired end use and the specific requisite combination of properties for that use, the single composition most preferred for its overall balance of properties is the composition of Example 2 (e).

Claims:

1. A molding composition comprising
(A) 20-90 weight percent, preferably 35-70 weight percent of polyester having an inherent viscosity of at least 0.4, preferably 0.4-1.2,
(B) 0-50 weight percent of a reinforcing or filling material,
(C) 0-15 weight percent of at least one compound selected from the group consisting of antimony oxide and antimonates of a metal selected from Groups I, II and VIII of the Periodic Table, and
(D) 3-30 weight percent of a Group I metal salt of a tetrahalophthalic acid, where the halogen is selected from bromine and chlorine.

2. The composition of Claim 1 where the polyester is selected from the group consisting of polyalkylene terephthalate homopolymers and polyalkylene terephthalate copolymers having a comonomer content of not more than 20 weight percent.

3. The composition of Claim 1 where the polyester is selected from the group consisting of polyethylene terephthalate, polybutylene terephthalate, copolymers of ethylene terephthalate and butylene terephthalate, and mixtures of polyethylene terephthalate and polybutylene terephtalate.

4. The composition of Claim 3 wherein the polyester contains at least 80 weight percent ethylene terephthalate units further comprising

(E) material present in an amount sufficient to provide a $\Delta H_H/\Delta H_C$ ratio for the composition of less than 0.25, said material consisting essentialy of the reaction product of

(a) at least one compound selected from hydrocarbon acids containing 7 to 25 carbon atoms and organic polymers containing pendant carboxyl groups, and

(b) at least one compound selected from sodium and potassium ion sources, which sodium and potassium ion source compounds are capable of reacting with the carboxyl groups in the at least one compound (a), and

(F) at least one compound present in an amount sufficient to provide a lowering of at least 4°C of the Tpk of the composition as compared with a composition otherwise identical but not containing said at least one compound (F),

said compound being selected from

(a) organic esters selected from the product of an aromatic carboxylic acid of 7-11 carbon atoms containing at least 1 carboxyl group per aromatic nucleus which is attached directly to said nucleus, and an alcohol selected from those of the formula $(HOCH_2)_2R'$ wherein x is 1, 2 or 3 and R' is a hydrocarbon radical of 2-15 carbon atoms or those of the formula $HO(R''O)_yR'''$ wherein y is a cardinal number between 1 and

15, R" is a hydrocarbon radical of 2-15 carbon atoms, and R"' is -H or a hydrocarbon radical of 2-20 carbon atoms,

(b) organic ketones of the formula

$$R\overset{\overset{O}{\|}}{C}R,$$

(c) organic sulfones of the formula RSOOR,

(d) organic sulfoxides of the formula $R_2SO$,

(e) organic nitriles of the formula RCN, and

(f) organic amides of the formula

$$R\overset{\overset{O}{\|}}{C}NR''R \text{ or } R\overset{\overset{O}{\|}}{S}ONR'R$$

wherein in formulas (b) through (f) each R can be the same as, or different from, any other R and is a hydrocarbyl group of 1-25 carbon atoms, while in the formulas in (f) R' is hydrogen or a hydrocarbyl group of 1-25 carbon atoms.

5. The composition of Claim 1 wherein the tetrahalophthalic acid is tetrabromophthalic acid.

6. The composition of Claim 1 wherein the Group I metal salt in component (D) is selected from sodium and potassium.

7. The composition of Claim 1 wherein the component (D) comprises 5-20, preferably 10-18 weight percent of the composition.

8. The composition of Claim 1 wherein the component (C) comprises 0.5-10.0, preferably 1.5-4.0 weight percent of the composition.

9. The composition of Claim 1 wherein the metal of component (C) is selected from sodium, potassium, zinc and nickel.

10. The composition of Claim 1 wherein the component (B) comprises 15-45, preferably 25-35 weight percent of the composition.

11. The composition of Claim 1 wherein the component (B) is selected from glass fibers, graphite fibers, aramid fibers, glass beads and flakes, aluminum and calcium silicates, asbestos and mica.

12. The composition of Claim 4 wherein the component (E) is selected from sodium salt of stearic acid, potassium salt of stearic acid, sodium salt of ethylene/methacrylic acid copolymer, potassium salt of ethylene/methacrylic acid copolymer, sodium salt of ethylene/maleic anhydride copolymer and sodium versatate.

13. The composition of Claim 4 wherein the component (F) is selected from the group consisting of diphenyl carbonate, dibenzoate of neopentyl glycol, dibenzoate of triethylene glycol, dibenzoate of diethylene glycol, dibenzoate of dipropylene glycol, tris-2-ethyl hexyl trimellitate, butyl carbitol adipate, triethylene glycol caprate-caprylate, phenyl benzoate, pentaerythritol tetrabenzoate, trimethylolethane tribenzoate, dioctylphthalate, diisodecylphthalate, benzophenone, 4-fluorobenzophenone, diphenyl sulfone, N-ethyl-o,p-toluene sulfonamide, tolyl sulfoxide, lauryl nitrile, erucyl nitrile, polyethylene glycol 400 bis(2-ethylhexanoate), and N-tallow toluene sulfonamide.

14. The composition of Claim 4 wherein the weight ratio of the quantities of components (E) and (F) is from 2:1 to 1:3.

15. The method of making a flame retardant polyester molding composition characterized by improved thermal stability, better color, higher heat deflection temperature and no blooming comprising melt blending 3-30 weight percent of a Group I metal salt of tetrahalophthalic acid, where the halogen is selected from bromine and chlorine, with

(A) 20-90 weight percent of polyester having an inherent viscosity of at least 0.4,

(B) 0-50 weight percent of a reinforcing or filling material, and

(C) 0-15 weight percent of at least one compound selected from the group consisting of antimony oxide and antimonates of a metal selected from Groups I, II and VIII of the Periodic Table.

16. Molded articles prepared from the composition of Claim 1.